# FASCICULE DE BREVET EUROPEEN

(11) **EP 3 157 837 B1**
(45) Date de publication et mention de la délivrance du brevet: **16.05.2018**
(21) Numéro de dépôt: 15753707.7
(22) Date de dépôt: 22.06.2015
(51) Int. Cl.: B65D 63/08, F16B 2/08

(54) **COLLIER DE SERRAGE A BOUCLE TRANSVERSALE ET OUTIL DE SERRAGE**
BANDKLEMME MIT DURCHGANGSREIFEN UND SPANNWERKZEUG
BAND CLAMP COMPRISING A THROUGH-HOOP AND CLAMPING TOOL

(30) Priorité: 23.06.2014 FR 1455795
(43) Date de publication de la demande: 26.04.2017
(73) Titulaire: Etablissements Caillau, 92130 Issy-les-Moulineaux (FR)
(72) Inventeur: PREVOT, Fabrice, F-41130 Selles-sur-Cher (FR); RIGOLLET, Nicolas, F-41200 Romorantin (FR); BEAUVAIS, Julien, F-41200 Romorantin (FR); ESPERET, Quentin, 77164 FERRIERES EN BRIE (FR)
(74) Mandataire: Intès, Didier Gérard André
(86) Numéro de dépôt international: PCT/FR2015/051646
(87) Numéro de publication internationale: WO 2015/197961

(56) Documents cités:
- EP-A2- 0 187 693
- EP-A2- 1 340 689
- EP-A2- 1 775 220
- DE-U1- 20 104 180
- DE-U1- 20 104 180
- GB-A- 2 168 103
- GB-A- 2 254 105
- US-A- 193 946
- US-A- 1 241 301
- US-B2- 7 373 695

## Description

La présente invention concerne un collier de serrage comprenant une bande métallique enroulée sur elle-même et une boucle transversale retenue à la première extrémité de la bande et formant, du côté externe de ladite première extrémité, un passage dans lequel la deuxième extrémité de la bande peut être insérée sur la première extrémité, la deuxième extrémité de la bande ainsi insérée étant apte à être emboutie pour coopérer avec au moins l'un des éléments comprenant la boucle transversale et la première extrémité de la bande, afin d'être retenue contre un déplacement dans le sens d'une augmentation du diamètre du collier.

Un collier de ce type est connu, par exemple par les brevets EP 1 775 220, US 5 566 726 et US 7 373 695. Pour serrer le collier autour d'un objet, il faut, après avoir enroulé la bande autour de l'objet et avoir inséré la deuxième extrémité de la bande dans le passage de la boucle, exercer une traction sur la deuxième extrémité de manière à réduire le diamètre du collier, puis emboutir la deuxième extrémité pour la retenir contre la boucle et/ou contre la première extrémité. En général, lors de cet emboutissage ou juste après, on coupe la deuxième extrémité à proximité de la boucle.

Ces opérations doivent pouvoir être réalisées in-situ, dans l'environnement du ou des objets serrés à l'aide du collier, avec un outil peu encombrant et aisé à manipuler. Pour que le serrage doit de bonne qualité, il importe de bien positionner le collier par rapport à l'outil, en particulier de bien positionner la deuxième extrémité de la bande pour son emboutissage.

Les brevets EP 1 775 220 et US 5 566 726 précités utilisent des outils dont le positionnement par rapport à la bande du collier est imprécis. Le brevet US 7 373 695 propose un outil, présenté de manière très schématique, qui présente des flancs avec des projections inférieures formant des semelles sur lesquelles les bords de la boucle reposent. Ceci nécessite une conformation très particulière de la boucle, puisqu'elle doit avoir des bords en débord latéral pouvant reposer sur les semelles. De plus les flancs de l'outil sont extrêmement encombrants latéralement, de sorte qu'il existe de nombreuses situations dans lesquelles l'environnement du ou des objets à serrer est trop encombré pour que cet outil puisse être utilisé.

L'invention se propose de remédier au moins en partie à ces inconvénients de l'état de la technique, en proposant un collier qui puisse être plus facilement positionné avec précision par rapport à l'outil de serrage.

Ce but est atteint grâce au fait que la boucle porte au moins une patte externe en saillie radiale, la patte présentant la forme d'un crochet ayant une tige portant une tête sous laquelle un dégagement est formé.

La patte externe peut être réalisée de manière simple, dans un faible encombrement latéral. En profitant du dégagement qui est formé sous la tête de la patte, on peut insérer un organe de positionnement, qui peut en particulier être une partie de l'outil de serrage du collier, de telle sorte que cet outil vienne coopérer avec la ou les pattes externes pour positionner le collier en vue de réaliser son serrage. Dans cette coopération, la tige du crochet favorise le bon positionnement latéral (c'est-à-dire dans la direction transversale à la bande) du collier, tandis que la tête favorise le bon positionnement tangentiel (c'est-à-dire dans une direction parallèle à une tangente à la bande passant par la boucle).

Selon une option, la tête du crochet présente un bord libre orienté sensiblement selon la longueur de la bande.

Le crochet est ainsi de forme particulièrement simple à réaliser.

Selon une option, le passage comprend un tronçon de contention délimité par au moins une portion de paroi externe de la boucle située au-dessus de la face externe de la première extrémité de la bande, et la patte externe est décalée longitudinalement par rapport à cette portion de paroi externe.

La portion de paroi externe joue ainsi pleinement son rôle de paroi de contention. Si, lors du serrage du collier, la patte venait à être déformée ou endommagée, ceci n'affecterait aucunement la qualité de la contention réalisée par la portion de paroi externe.

La patte externe peut être séparée de la portion de paroi externe par une découpe. Cette patte est alors particulièrement simple à fabriquer. En particulier, la patte externe et la portion de paroi précitée peuvent être obtenues à partir d'une même paroi de base, découpée transversalement de manière à former une première partie qui, par suite d'un pliage approprié forme la portion de paroi et une deuxième partie qui, par suite d'un pliage différent, forme la patte externe.

Selon une option, la patte externe est située au voisinage d'un bord transversal de la boucle qui est éloigné du bout libre de la deuxième extrémité de la bande.

Ainsi, la patte externe ne forme pas d'obstacle ou de gêne lors de la découpe de la deuxième extrémité de la bande, cette découpe pouvant être réalisée avec une grande netteté, à proximité immédiate du bord transversal de la boucle éloigné de la patte. De même, l'embouti qui vise à retenir la deuxième extrémité de la bande pour maintenir le collier serré peut être réalisé avec précision, vers le milieu de la boucle ou vers son bord transversal éloigné de la patte, sans que cette patte ne forme un obstacle ou une gêne.

Selon une option, la boucle présente deux pattes externes en saillie radiale analogues qui s'étendent respectivement à partir de chacun des deux côtés longitudinaux de la boucle, la deuxième extrémité de la bande pouvant être insérée entre les tiges desdites pattes.

Ceci favorise encore le calage latéral du collier par rapport à l'outil de serrage.

Selon une option, le collier présente des moyens pour ne permettre l'insertion de la deuxième extrémité de la bande entre les tiges des pattes qu'au voisinage de la jonction de ces tiges avec les côtés longitudinaux de la boucle.

En quelque sorte, ces moyens constituent un détrompeur, qui évite que, lors de la fermeture du collier sur un objet à serrer, le collier semble correctement fermé, alors que, en réalité, la deuxième extrémité de la bande serait juste engagée entre les pattes, sans être engagée dans la partie de la boucle (par exemple la portion de paroi précitée, délimitant le tronçon de contention), effectivement utile au serrage.

Selon une option, au moins l'une des pattes, de préférence les deux pattes, présente une nervure interne à la jonction entre sa tige et sa tête.

Cette nervure présente un double intérêt. D'une part, elle rigidifie la patte externe à la jonction entre sa tige et sa tête, et favorise donc le maintien du bon positionnement du collier pendant le serrage, alors que la réalisation de l'embouti de la deuxième extrémité de la bande peut mettre en jeu des efforts assez importants. D'autre part, si sa taille est appropriée, la nervure peut jouer le rôle de détrompeur précédemment évoqué.

Selon une option, la boucle a une partie interne qui est disposée contre la face interne de la première extrémité de la bande et dont un bord transversal de calage, tourné à l'opposé du bout libre de la première extrémité de la bande, coopère avec une arête transversale de calage de la première extrémité de la bande qui délimite un renfoncement de calage formé dans cette première extrémité et, à l'état embouti pour être retenue contre un déplacement dans le sens d'une augmentation du diamètre du collier, la deuxième extrémité de la bande présente une arête transversale de retenue reçue dans le renfoncement de calage et coopérant en butée avec un bord de retenue de ce renfoncement de calage.

Dans ce cas, la première extrémité de la bande est calée par rapport à la boucle par la coopération entre le bord de calage et l'arête de calage. L'embouti de la deuxième extrémité de la bande forme l'arête de retenue et cette dernière coopère, non pas avec la boucle, mais avec le bord de retenue du renfoncement de calage, lui-même formé dans la première extrémité de la bande. En d'autres termes, le collier est serré par la coopération directe de sa première extrémité avec sa deuxième extrémité. En situation serrée, la boucle n'est donc pas soumise à des efforts importants, ces efforts s'exerçant directement entre les deux extrémités de la bande. Ceci limite les risques de dégradation du serrage au cours de la vie du collier.

L'invention sera bien comprise et ses avantages apparaîtront mieux à la lecture de la description détaillée qui suit, d'un mode de réalisation représenté à titre d'exemples non limitatifs. La description se réfère aux dessins annexés, sur lesquels :
- la figure 1 est une vue en perspective d'un collier conforme à l'invention, avant son serrage ;
- la figure 2 est une vue partielle en perspective du même collier, après son serrage ;
- la figure 3 montre, en perspective, la face interne de la bande du collier des figures 1 et 2, au voisinage de la boucle transversale ;
- la figure 4 est une vue en coupe selon le plan IV-IV de la figure 2 ;
- la figure 5 montre schématiquement, en vue de côté, la coopération du collier des figures précédentes avec son outil de serrage ;
- la figure 6 est une vue en bout de la figure 5, selon la flèche VI ; et
- la figure 7 est une vue partielle en perspective montrant la première extrémité de la bande d'un collier portant une boucle transversale, selon une variante.

Dans le présent texte, on qualifiera de "interne" un élément qui est situé vers le centre géométrique C du cercle défini par le collier, alors que l'on qualifiera de "externe" un élément situé du côté opposé à ce centre C. Par ailleurs, on qualifiera de "longitudinal" un élément dirigé selon la longueur de la bande c'est-à-dire, lorsque la bande est enroulée comme montré sur les figures, selon la direction d'enroulement. On qualifiera de "transversal" un élément orienté perpendiculairement à cette longueur, c'est-à-dire selon la largeur de la bande.

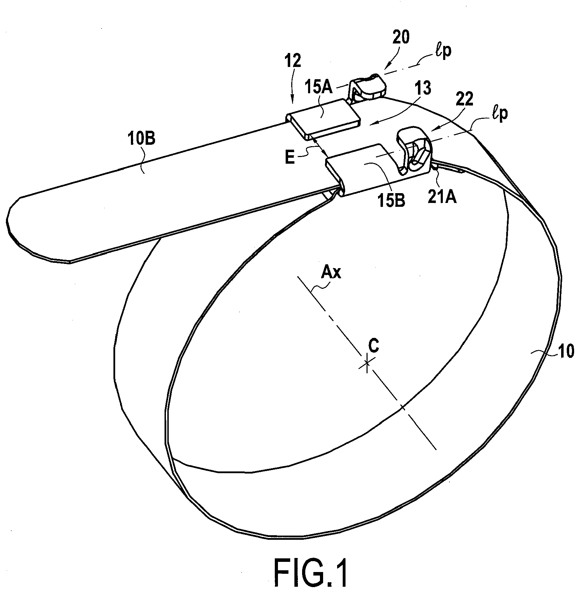

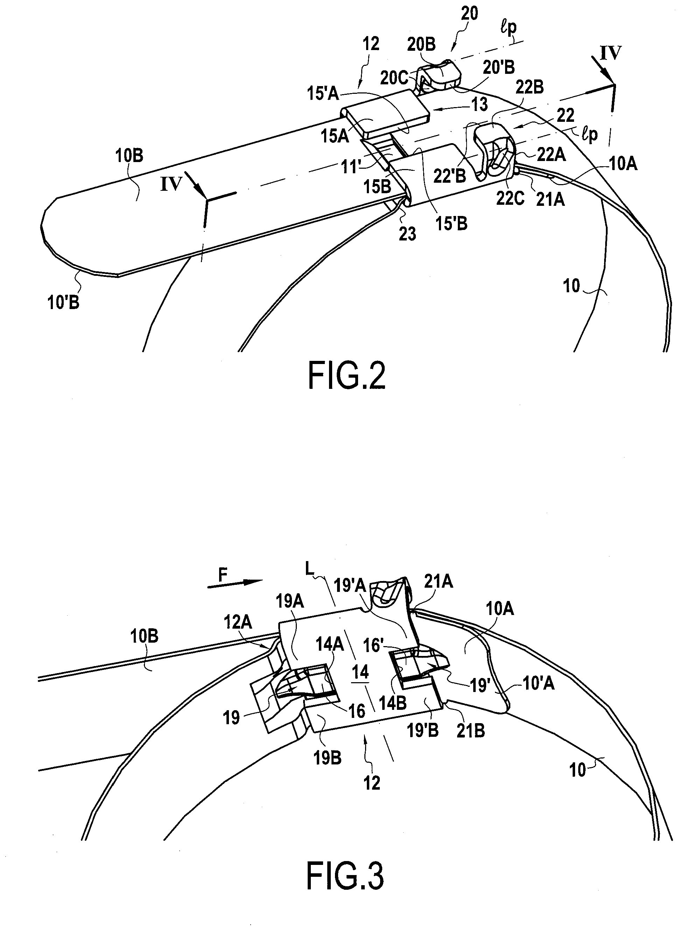

On décrit tout d'abord les figures 1 à 3, sur lesquelles on voit un collier de serrage comprenant une bande métallique 10 enroulée sur elle-même et une boucle transversale 12 retenue à la première extrémité 10A de la bande. Comme on le voit mieux sur les figures 1 et 2, la boucle 12 forme, du côté externe de la première extrémité 10A, un passage 13 dans lequel la deuxième extrémité 10B de la bande est insérée.

Au sens de la présente demande la "première extrémité" de la bande est tout le tronçon de la première extrémité qui coopère avec la boucle. De même la "deuxième extrémité" est tout le tronçon de la deuxième extrémité qui coopère avec la boucle.

Comme on le voit mieux sur la figure 3, la boucle 12 a une partie interne 14 disposée contre la face interne de la première extrémité 10A de la bande 10. Du côté externe, la boucle présente deux portions de paroi externe, respectivement 15A et 15B qui sont repliées, chacune, à partir d'un des bords longitudinaux de la partie interne 14. Ces portions de paroi externe forment des ailes qui sont situées au-dessus de la face externe de la première extrémité 10A de la bande 10. L'espace délimité radialement entre les faces internes de ces ailes repliées et la face externe de l'extrémité 10A de la bande forme un tronçon de contention du passage 13, dans lequel est passée la deuxième extrémité 10B de la bande. La notion de "tronçon de contention" signifie que la hauteur radiale de cet espace est juste suffisante pour permettre l'introduction de la deuxième extrémité 10B de la bande, qu'elle retient donc radialement vers l'extérieur.

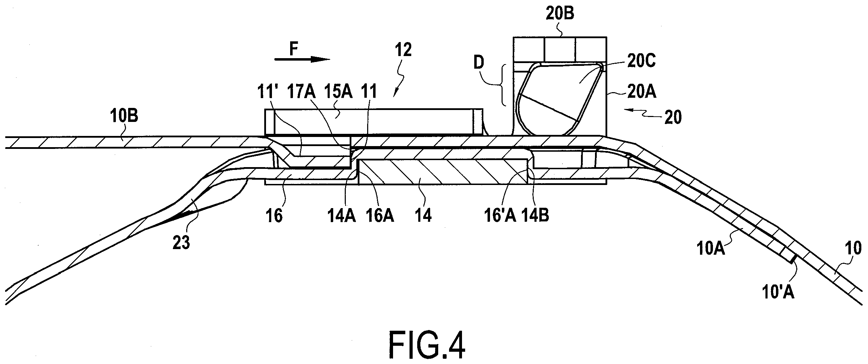

On voit, en particulier sur les figures 3 et 4, que la première extrémité 10A présente un renfoncement de calage 16 qui contribue au calage de la boucle par rapport à la première extrémité. En effet, comme on le voit mieux sur la figure 4, ce renfoncement de calage 16 présente une arête transversale de calage 16A qui coopère avec un bord transversal de calage 14A de la partie interne de la boucle 12. Dans l'exemple représenté, ce bord et cette arête sont rectilignes et orientés transversalement à la bande. Ainsi, la coopération entre l'arête 16A et le bord 14A empêche le déplacement de la première extrémité 10A de la bande dans le sens F (voir figure 4) par rapport à la boucle 12.

Pour une retenue dans l'autre sens, on utilise en l'occurrence des moyens analogues à ceux qui viennent d'être décrits. En effet, dans l'exemple représenté, la partie interne 14 de la boucle 12 présente un bord transversal de calage supplémentaire 14B qui est tourné du côté du bout libre 10A' de la première extrémité 10A de la bande et qui coopère avec une arête transversale de calage supplémentaire 16'A de la première extrémité de la bande. Cette arête transversale de calage supplémentaire délimite un renfoncement de calage supplémentaire 16' formé dans cette première extrémité.

Le bord transversal de calage supplémentaire 16B et le renfoncement de calage supplémentaire 16' sont globalement symétriques du bord transversal de calage 16A et du renfoncement de calage 16 par rapport à une ligne transversale médiane L de la partie interne de la boucle. La coopération entre l'arête 16'A et le bord 14B évite les déplacements de la première extrémité 10A de la bande par rapport à la boucle 12 dans le sens opposé au sens F indiqué sur la figure 4.

A l'état serré du collier, la deuxième extrémité de la bande, qui est insérée dans le passage 13, est emboutie pour coopérer avec au moins l'un des éléments comprenant la boucle transversale 12 et la première extrémité 10A de la bande 10, afin d'être retenue contre un déplacement dans le sens d'une augmentation du diamètre du collier.

La figure 1 montre la situation alors que la deuxième extrémité 10B est insérée dans le passage 13 avant d'être emboutie, tandis que les figures 2 et 4 montrent la situation après réalisation de l'embouti.

En l'espèce, comme on le voit mieux sur la figure 4, la deuxième extrémité 10B de la bande présente une arête transversale de retenue 11 qui est reçue dans le renfoncement de calage 16. Cette arête transversale de retenue coopère en butée avec un bord de retenue 17A du renfoncement de calage 16. On comprend que la coopération entre l'arête de retenue 11 et le bord de retenue 17A empêche les déplacements de la deuxième extrémité 10B de la bande par rapport à la première extrémité 10A dans le sens de la flèche F de la figure 4. En d'autres termes, une fois le collier serré, cette coopération empêche le desserrage du collier.

L'embouti de la deuxième extrémité 10B de la bande forme un renfoncement de retenue 11' qui forme une saillie sur la face interne de la deuxième extrémité 10B de la bande. L'arête transversale de retenue 11 délimite ce renfoncement de retenue 11'. Comme on le voit sur la figure 4, le renfoncement de retenue est reçu dans le renfoncement de calage 16.

Le renfoncement de retenue 11' est délimité par une découpe transversale, l'arête de retenue 11 étant formée sur la lèvre de cette découpe qui est située au fond du renfoncement de retenue 11' et qui est tournée du côté opposé au bout libre 10'B de la deuxième extrémité de la bande.

En l'occurrence, le renfoncement de calage 16 forme une cuvette dont un côté présente l'arête de calage 16A sur sa face externe au renfoncement 16 et présente le bord de retenue 17A sur sa face interne au renfoncement. Par exception aux notions de "interne" et "externe" définies précédemment, on définit ainsi les faces interne et externe de renfoncement par rapport au renfoncement en lui-même.

Comme on le voit mieux sur la figure 3, le bord transversal de calage 14A est un bord libre, situé sur la première extrémité libre 12A de la partie interne 14 de la boucle 12. Plus précisément, en l'occurrence, le bord transversal de calage 14A est formé au fond d'une encoche 19 de la première extrémité libre 12A précitée. Le renfoncement de calage 16 est reçu dans l'encoche en étant bordé latéralement par des avancées 19A et 19B de part et d'autre de l'encoche.

Comme on le voit sur la figure 3, la face interne du renfoncement 16 part, vers le fond de l'encoche, du niveau radial de la face interne de la partie interne 14 de la boucle et revient progressivement dans le plan de la bande en s'éloignant du fond de l'encoche 19 pour ne pas former de ressaut brutal sur la face interne de la bande.

On relève en revanche que la première extrémité de la bande située à l'extrémité libre 12A de la partie interne de la boucle 12 forme un ressaut 23 vers l'intérieur, de sorte que la face interne de la bande située du côté de ce ressaut opposé au bout libre 10'A de la bande est située sensiblement dans la continuité de la face interne de la boucle 12. En effet, la hauteur du ressaut, mesurée radialement, correspond sensiblement à l'épaisseur Eb de la partie interne 14 de la boucle.

Comme le bord transversal de calage 14A, le bord de calage transversal supplémentaire 14B est un bord libre de la boucle mais il est cette fois situé à la deuxième extrémité libre 12B de la partie interne 14 de la boucle opposée à sa première extrémité libre 12A. Ce bord de calage supplémentaire 14B est également formé au fond d'une encoche 19' de la deuxième extrémité libre 12B de la partie interne 14 de la boucle, qui est bordée par des avancées longitudinales 19'A et 19'B.

On remarque également que la première extrémité 10A de la bande présente, au niveau de la deuxième extrémité libre 12B de la partie interne 14 de la boucle, des saillies latérales 21A, 21B. Ces saillies sont réalisées par un poinçonnage partiel de la première extrémité de la bande qui fait localement fluer la matière transversalement vers l'extérieur. Elles forment en quelques sortes des "oreilles" latérales avec lesquelles coopère l'extrémité libre 12'B de la boucle et contribuent donc à retenir la première extrémité de la bande contre un déplacement dans le sens opposé à la flèche F par rapport à la boucle 12. Ainsi, dans l'exemple représenté, pour retenir la première extrémité de la bande par rapport à la boucle dans le sens opposé au sens de la flèche F, on utilise à la fois les saillies latérales 21A et 21B précitées, et l'arête transversale de calage supplémentaire 16'A coopérant avec le bord transversal de calage supplémentaire 14B.

Cela permet d'obtenir une résistance très élevée aux efforts exercés lors du serrage du collier. En effet, lors du serrage, pour exercer une traction sur la deuxième extrémité de la bande de manière à obtenir le diamètre minimum de serrage, l'outil de serrage peut prendre appui sur la boucle 12 de sorte qu'il est alors important que la boucle soit solidement retenue par rapport à la bande.

Bien entendu, on peut choisir cependant d'effectuer la retenue dans ce sens opposé au sens F uniquement à l'aide des saillies latérales 21A et 21B, ou bien uniquement à l'aide de la coopération entre l'arête transversale 16'A et le bord transversal 14B. On peut encore choisir un autre mode de retenue à la disposition de l'homme du métier.

Par ailleurs, on a décrit et représenté un exemple avantageux de l'embouti de la deuxième extrémité de la bande qui sert à la maintenir serrée. Dans cet exemple, on réalise une retenue avec précision et on fait en sorte que les efforts de traction auxquels la bande à l'état serré du collier, est soumise à l'état serré du collier s'exercent « bande sur bande », sans faire intervenir la boucle 12. Cependant, l'invention s'applique également à d'autres possibilités de retenue de la deuxième extrémité de la bande. Par exemple, l'embouti de la deuxième extrémité 10B de la bande pourrait être réalisé comme dans le brevet EP 1 775 220 (en utilisant un perçage de la partie interne de la boucle), comme dans le brevet US 7 373 695, ou encore comme dans le brevet français 2 542 388.

Selon l'invention, la boucle 12 comporte au moins une patte externe en saillie radiale, qui présente la forme d'un crochet, avec une tête sous laquelle un dégagement est formé.

En l'espèce, la boucle 12 comporte deux pattes externes 20 et 22 de ce type, qui sont en saillie radiale. Chacune de ces pattes présente la forme d'un crochet, avec une tige, respectivement 20A et 22A, et une tête, respectivement 20B et 22B, de sorte qu'un dégagement D est formé sous les têtes 20B et 22B (voir figure 4). Ce dégagement forme un tronçon du passage 13, la deuxième extrémité 10B de la bande passant sous les têtes 20B et 22B des crochets. Cependant, comme indiqué précédemment, c'est le tronçon de contention de ce passage, formé sous les ailes repliées 15A et 15B, qui sert à retenir l'extrémité 10B de la bande contre un déplacement radial vers l'extérieur.

En l'espèce, les têtes ont des bords libres 20'B, 22'B qui s'étendent longitudinalement. Les tiges s'étendent en vis-à-vis, de part et d'autre de la boucle, en partant des bords longitudinaux de sa partie interne 14, la deuxième extrémité 10B de la bande passant entre elles pour accéder au tronçon de contention du passage 13.

Les pattes externes 20 et 22 sont décalées longitudinalement par rapport aux portions de parois externes 15A et 15B précitées. La portion de paroi externe 15A ou 15B et la patte externe correspondante, 20A ou 20B, s'étendent à partir d'un bord longitudinal de la boucle 12 et présentent la même longueur mesurée à partir de ce bord, dans la direction transversale, la patte externe présentant une ligne longitudinale de pliage lp qui sépare la tige 20A (respectivement 22A) et la tête du crochet 20B (respectivement 22B). Bien entendu, la longueur de la patte 20A ou 20B est mesurée en suivant cette patte dans le sens transversal de la bande, selon une ligne brisée, qui part de l'attachement de la patte à la bande et va jusqu'au bord libre 20'A (respectivement 20'B) de la patte.

La portion de paroi externe 15A (respectivement 15B) présente un bord longitudinal libre 15'A (respectivement 15'B) situé du côté extérieur de la première extrémité 10A de la bande.

Par exemple, chaque aile de la boucle 12 dans lesquelles une portion de paroi externe 15A ou 15B est formée, peut initialement former un tout avec la patte 20 ou 22 ; une simple découpe transversale sépare la patte de la portion de paroi et cette dernière est repliée jusqu'à être parallèle à la portion interne 14 de la boucle 12, tandis que la patte est conformée en crochet.

La boucle 12 est, au moins sur sa partie externe, symétrique par rapport à un plan médian IV-IV de la bande 10, perpendiculaire à l'axe Ax du collier. En l'espace, même la partie interne 14 de la boucle est symétrique par rapport au plan IV-IV.

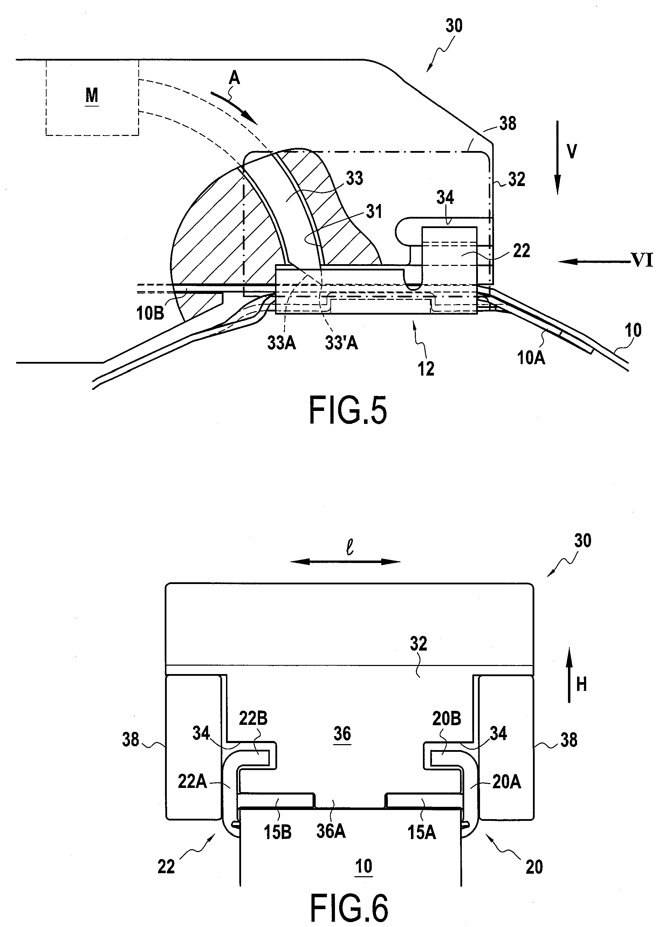

Les pattes 20 et 22 servent à assurer un bon positionnement relatif du collier et de l'outil qui sert à le serrer, comme on le comprend mieux en considérant les figures 5 et 6 qui montrent la coopération du collier avec l'outil qui sert à le serrer.

Pour simplifier, seule la partie de tête active de l'outil est représentée. Pour plus de détails, on pourra par exemple se reporter au brevet français FR 2 542 388.

L'outil comprend une tête 32 apte à être positionnée sur la boucle transversale 12 du collier et un poinçon 33 apte à être déplacé pour emboutir la deuxième extrémité 10B de la bande 10. La tête 32 présente au moins un logement 34 pour recevoir au moins une partie de ladite au moins une patte externe 20, 22 portée par la boucle 12 du collier, afin de positionner l'outil par rapport au collier. Le logement peut comprendre une fente en forme de crochet.

La partie de l'outil 30 représentée sur les figures 5 et 6 comprend sa tête 32 et son poinçon 33 qui, par un système d'actionnement M, est déplacé dans un canal 31 pour venir emboutir la deuxième extrémité 10B de la bande du collier et former l'arrête de retenue. Sur la figure 5, le poinçon 33 est représenté au moment où il touche la bande du collier, dans son déplacement d'emboutissage selon la flèche A.

Le collier est serré par traction (par des moyens non représentés) sur cette deuxième extrémité, alors que la tête de l'outil prend appui sur la boucle 12. Une fois que le niveau de serrage souhaité est obtenu, le poinçon 33 est déplacé pour réaliser l'emboutissage. On relève que la tête 33A du poinçon 33 est biseautée et présente une pointe transversale de découpe 33'A. Elle réalise simultanément l'arrête de retenue 11 et le renfoncement de retenue 11'.

Comme indiqué précédemment, les pattes 20 et 22 servent au positionnement relatif de l'outil et du collier. Elles permettent de positionner la boucle dans un plan perpendiculaire en sens V de déplacement du poinçon pour l'emboutissage.

Plus précisément, les pattes 20 et 22 sont au moins en partie insérées dans des logements formés par des renfoncements latéraux 34. Plus précisément, ce sont les têtes 20B et 22B des crochets formés par ces pattes, qui pénètrent dans ces renfoncements 34. La face interne de la tête du crochet peut donc coopérer avec la face du renfoncement 34 qui est située en regard, pour éviter un déplacement de l'outil par rapport au collier dans le sens de la flèche H indiquée sur la figure 6.

Par ailleurs, dans la mesure où deux pattes 20 et 22 sont présentes en étant respectivement situées sur chacun des deux bords longitudinaux de la boucle 12, c'est-à-dire de part et d'autre des bords longitudinaux du collier, une portion centrale 36 de la tête de l'outil située du côté interne (vers le centre du collier) par rapport aux renfoncements 34 se cale entre les tiges 20A et 22A des crochets formés par les pattes 20 et 22. Ceci permet donc d'éviter les débattements latéraux dans le sens I de l'outil par rapport au collier. On relève que la tête de l'outil peut avoir des joues 38 qui ferment les renfoncements 34 sur les côtés de cette tête, de sorte que les logements pour les pattes prennent la forme de fentes en forme de crochets. Ces joues 38 sont visibles sur la figure 6 et l'une d'elles est esquissée en trait mixte interrompu sur la figure 5.

Dans le collier qui vient d'être décrit, la boucle 12 est formée à partir d'un flanc métallique qui est découpé et plié de manière convenable. En l'occurrence, le "plan de joint" de ce flanc conformé en boucle est situé du côté extérieur du collier, entre les ailes repliées 15A et 15B. En l'espèce, les extrémités longitudinales (bords longitudinaux libres) 15'A, 15'B de ces ailes sont espacées d'une largeur E. D'une part, ceci permet une économie de matière pour le matériau dans lequel la boucle est formée. D'autre part, comme on le voit sur la figure 6, ceci peut favoriser le calage de l'outil par rapport au collier. En effet, la portion centrale 36 de la tête 32 de l'outil peut ainsi présenter une nervure centrale 36A en saillie vers l'intérieur, qui se loge dans l'espace formé entre les extrémités libres des ailes 15A et 15B, pour pouvoir coopérer directement avec la deuxième extrémité 10B de la bande du collier. En revanche, les saillies latérales qui s'étendent de part et d'autre de la nervure centrale 36A, du côté interne des renfoncements 34, coopèrent directement avec les ailes repliées 15A et 15B.

En considérant à nouveau les pattes 20 et 22, on voit que chacune d'elles présente une nervure interne, respectivement 20C et 22C à la jonction entre sa tige et sa tête. L'épaisseur des nervures internes va en augmentant en se rapprochant de la tête. Il peut par exemple s'agir de goussets inclinés sensiblement à 45 degrés par rapport à la direction radiale, en saillie vers l'intérieur des pattes. Ainsi, les nervures délimitent entre elles, au voisinage de la tête des crochets, une largeur inférieure à la largeur de la deuxième extrémité 10B de la bande. Ceci permet d'éviter que le manipulateur ne pense avoir fermé le collier en introduisant seulement la deuxième extrémité entre les pattes 20 et 22. En effet, s'il tente de la faire, la forme des nervures internes précitées repoussera naturellement la deuxième extrémité vers l'intérieur (vers le centre C du collier) c'est-à-dire sous les ailes repliées 15A et 15B, dans le tronçon de confinement du passage 13. En d'autres termes, les nervures 20C, 22C forment des moyens pour ne permettre l'insertion de la deuxième extrémité 10B de la bande entre les tiges 20A, 22A des pattes qu'au voisinage de la jonction entre ces tiges avec les côtés longitudinaux de la boucle 12.

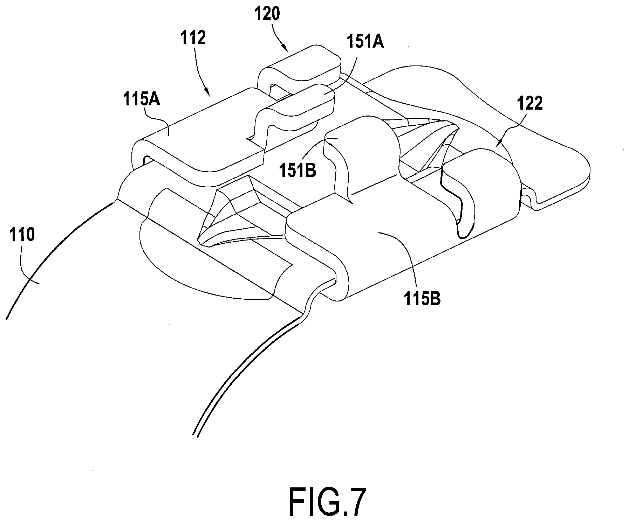

Sur la figure 7, les mêmes références que sur les figures précédentes, augmentées de 100, sont utilisées pour désigner les éléments correspondants.

Selon la variante illustrée sur cette figure, le bord longitudinal libe de la au moins une portion de paroi externe porte un crochet.

Plus précisément, on voit sur cette figure que la première extrémité de la bande 110 porte une boucle transversale 112 globalement analogue à la boucle 12 des figures précédentes, à ceci près que les bords longitudinaux libres des portions de paroi externe 115A et 115B portent des crochets 151A et 151B, qui sont relevés radialement vers l'extérieur. Ces crochets servent au démontage de la boucle par rapport à la bande du collier. En effet, un outil de démontage tel qu'une pince de type « circlips » peut être inséré dans l'espace qui est ménagé sous leurs têtes et être manoeuvré pour, en prenant appui sous les crochets, écarter les portions de paroi externe 115A et 115B, pour desserrer la boucle par rapport à la bande.

Pour la clarté du dessin, la figure 7 montre le collier à l'état ouvert, alors que la deuxième extrémité de la bande n'est pas insérée dans le passage formé, du côté externe de la première extrémité, par la boucle 112. Quand la deuxième extrémité est engagée dans ce passage, elle se trouve sous les pattes externes 120 et 122 et sous les portions de paroi 115A, 115B, et donc également sous les crochets 151A et 151B.

En général, c'est lorsque le collier est fermé et serré que l'on a besoin de le démonter en démontant la boucle. Un outil, par exemple du genre pince inséré sous les crochets 151A, 151B permet d'écarter ces crochets de la bande et donc d'ouvrir les portions de paroi 115 et 115B. Comme on l'a indiqué, les pattes externes 120 et 122 sont séparées de ces portions de paroi par des découpes. Il en résulte que l'écartement des portions de paroi 115A et 115B n'affecte pas la position des pattes externes, qui restent en place au-dessus de la face externe de la deuxième extrémité de la bande. Le dégagement formé sous les têtes des pattes externes peut être plus faible que dans l'exemple des figures précédentes. Ainsi, une fois que les portions de paroi 115A et 115B ont été écartées, la deuxième extrémité de la bande reste sous les têtes de pattes externes et a tendance à venir se placer contre elles. Il en résulte que la boucle, bien qu'étant desserrée, est provisoirement maintenue sur la bande. Ceci évite que la boucle ne se sépare de la bande et ne tombe au sol lorsqu'elle est démontée. Pour positivement la séparer de la bande, il suffit de faire glisser la deuxième extrémité de la bande en ouvrant ainsi le collier, tout en tenant la boucle.

On relève que les crochets 151A et 151B font plus fortement saillie radiale que les pattes externes 120 et 122 et que l'écartement de ces crochets l'un par rapport à l'autre est faible, par rapport à l'écartement entre les pattes externes. Ces différences ont un effet de détrompeur, permettant d'éviter de solliciter les crochets pour chercher à positionner le collier par rapport à l'outil de serrage, et d'éviter de chercher à démonter la boucle en agissant sur les pattes externes.

## Revendications

1. Collier de serrage comprenant une bande métallique (10) enroulée sur elle-même et une boucle transversale (12) retenue à la première extrémité (10A) de la bande et formant, du côté externe de ladite première extrémité, un passage (13) dans lequel la deuxième extrémité (10B) de la bande peut être insérée sur la première extrémité, la deuxième extrémité de la bande ainsi insérée étant apte à être emboutie pour coopérer avec au moins l'un des éléments comprenant la boucle transversale (12) et la première extrémité (10A) de la bande, afin d'être retenue contre un déplacement dans le sens d'une augmentation du diamètre du collier,
**caractérisé en ce que** la boucle (12) porte au moins une patte externe (20, 22) en saillie radiale, la patte présentant la forme d'un crochet ayant une tige (20A, 22A) portant une tête (20B, 22B) sous laquelle un dégagement (D) est formé.

2. Collier selon la revendication 1, **caractérisé en ce que** la tête (20B, 22B) du crochet présente un bord libre (20'B, 22'B) orienté sensiblement selon la longueur de la bande.

3. Collier selon la revendication 1 ou 2, **caractérisé en ce que** le passage (13) comprend un tronçon de contention délimité par au moins une portion de paroi externe (15A, 15B) de la boucle (12) située au-dessus de la face externe de la première extrémité (10A) de la bande et **en ce que** la patte externe (20, 22) est décalée longitudinalement par rapport à cette portion de paroi externe.

4. Collier selon la revendication 3, **caractérisé en ce que** la patte externe est séparée de la portion de paroi externe par une découpe.

5. Collier selon la revendication 4, **caractérisé en ce que** la portion de paroi externe (15A, 15B) et la patte externe (22, 22) s'étendent à partir d'un bord longitudinal de la boucle (12) et présentent la même longueur mesurée à partir de ce bord, dans la direction transversale, la patte externe présentant une ligne longitudinale de pliage (lp) qui sépare la tige (20A, 22A) et la tête (20B, 22B) du crochet.

6. Collier selon l'une quelconque des revendications 3 à 5, **caractérisé en ce que** la portion de paroi externe (15A, 15B) présente un bord longitudinal libre (15'A, 15'B) situé du côté extérieur de la première extrémité (10A) de la bande (10).

7. Collier selon la revendication 6, **caractérisé en ce que** le bord longitudinal libre de la au moins une portion de paroi externe (115A, 115B) porte un crochet (151A, 151B).

8. Collier selon l'une quelconque des revendications 1 à 7, **caractérisé en ce que** la patte externe est située au voisinage d'un bord transversal de la boucle qui est éloigné du bout libre de la deuxième extrémité de la bande.

9. Collier selon l'une quelconque des revendications 1 à 8, **caractérisé en ce que** la boucle présente deux pattes externes en saillie radiale (20, 22) analogues qui s'étendent respectivement à partir de chacun des deux côtés longitudinaux de la boucle (12), la deuxième extrémité (10B) de la bande (10) pouvant être insérée entre les tiges (20A, 22A) desdites pattes.

10. Collier selon la revendication 9, **caractérisé en ce qu'**il présente des moyens (20C, 22C) pour ne permettre l'insertion de la deuxième extrémité (10B) de la bande (10) entre les tiges (20A, 22A) des pattes (20, 22) qu'au voisinage de la jonction de ces tiges avec les côtés longitudinaux de la boucle (12).

11. Collier selon l'une quelconque des revendications 1 à 10, **caractérisé en ce que** au moins l'une des pattes (20, 22), de préférence les deux pattes, présente une nervure interne (20C, 22C) à la jonction entre sa tige (20A, 22A) et sa tête (20B, 22B).

12. Collier selon l'une quelconque des revendications 1 à 11, **caractérisé en ce que** la boucle (12) est, au moins sur sa partie externe, symétrique par rapport à un plan médian (IV-IV) de la bande (10), perpendiculaire à l'axe (Ax) du collier.

13. Collier selon l'une quelconque des revendications 1 à 12, **caractérisé en ce que** la boucle (12) a une partie interne (14) qui est disposée contre la face interne de la première extrémité (10A) de la bande (10) et dont un bord transversal de calage (14A), tourné à l'opposé du bout libre (10'A) de la première extrémité de la bande, coopère avec une arête transversale de calage (16A) de la première extrémité (10A) de la bande (10) qui délimite un renfoncement de calage (16) formé dans cette première extrémité et **en ce que**, à l'état embouti pour être est retenue contre un déplacement dans le sens d'une augmentation du diamètre du collier, la deuxième extrémité (10B) de la bande (10) présente une arête transversale de retenue (11) reçue dans le renfoncement de calage (16) et coopérant en butée avec un bord de retenue (17A) de ce renfoncement de calage (16).

14. Collier selon la revendication 13, **caractérisé en ce que** le bord transversal de calage (14A) est un bord libre situé sur une première extrémité libre (12A) de la partie interne (14) de la boucle (12), avantageusement formé au fond d'une encoche (19) de la première extrémité libre de la partie interne de la boucle.

15. Collier selon la revendication 13 ou 14, **caractérisé en ce que** l'embouti de la deuxième extrémité (10B) de la bande forme un renfoncement de retenue (11') qui est délimité par une découpe transversale, l'arête de retenue (11) étant formée sur la lèvre de ladite découpe qui est située au fond du renfoncement de retenue (11').

16. Collier selon l'une quelconque des revendications 13 à 15, **caractérisé en ce que** la partie interne (14) de la boucle (12) présente un bord transversal de calage supplémentaire (14B), tourné du côté du bout libre (10'A) de la première extrémité (10A) de la bande et coopérant avec une arête transversale de calage supplémentaire (16'A) de la première extrémité (10A) de la bande qui délimite un renfoncement de calage supplémentaire (16') formé dans cette première extrémité.

17. Outil de serrage pour serrer un collier selon l'une quelconque des revendications 1 à 16, comprenant une tête (32) apte à être positionnée sur la boucle transversale (12) du collier et un poinçon (33) apte à être déplacé pour emboutir la deuxième extrémité (10B) de la bande (10), **caractérisé en ce que** la tête (32) présente au moins un logement (34) pour recevoir au moins une partie de ladite au moins une patte externe (20, 22) portée par la boucle du collier, afin de positionner l'outil par rapport au collier.

18. Outil de serrage selon la revendication 17, **caractérisé en ce que** le logement (34) comprend une fente en forme de crochet.

## Patentansprüche

1. Klemmschelle, umfassend ein um sich selbst gewickeltes Metallband (10) und eine Querspange (12), die an dem ersten Ende (10A) des Bandes gehalten ist und auf der Außenseite des ersten Endes einen Durchgang (13) ausbildet, in den das zweite Ende (10B) des Bandes über dem ersten Ende eingefügt werden kann, wobei das so eingefügte zweite Ende des Bandes geeignet ist, tiefgezogen zu werden, um mit wenigstens einem der die Querspange (12) und das erste Ende (10A) des Bandes umfassenden Elemente zusammenzuwirken, um gegen ein Bewegen in der Richtung einer Vergrößerung des Durchmessers der Schelle festgehalten zu werden,
**dadurch gekennzeichnet, dass** die Spange (12) wenigstens eine radial vorspringende äußere Lasche (20, 22) trägt, wobei die Lasche die Form eines Hakens mit einem Schaft (20A, 22A), der einen Kopf (20B, 22B) trägt, unter dem ein Freiraum (D) ausgebildet ist, aufweist.

2. Schelle nach Anspruch 1, **dadurch gekennzeichnet, dass** der Kopf (20B, 22B) des Hakens einen freien Rand (20'B, 22'B), welcher im Wesentlichen entlang der Länge des Bandes ausgerichtet ist, aufweist.

3. Schelle nach Anspruch 1 oder 2, **dadurch gekennzeichnet, dass** der Durchgang (13) einen Fixierabschnitt umfasst, der durch wenigstens einen Außenwandabschnitt (15A, 15B) der Spange (12), welcher oberhalb der Außenseite des ersten Endes (10A) des Bandes gelegen ist, begrenzt ist, und dass die äußere Lasche (20, 22) gegenüber diesem Außenwandabschnitt längsversetzt ist.

4. Schelle nach Anspruch 3, **dadurch gekennzeichnet, dass** die äußere Lasche durch einen Ausschnitt von dem Außenwandabschnitt getrennt ist.

5. Schelle nach Anspruch 4, **dadurch gekennzeichnet, dass** der Außenwandabschnitt (15A, 15B) und die äußere Lasche (20, 22) sich von einem Längsrand der Spange (12) aus erstrecken und, von diesem Rand aus gemessen, in der Querrichtung, die gleiche Länge aufweisen, wobei die äußere Lasche eine Längsbiegelinie (Ip) aufweist, die den Schaft (20A, 22A) und den Kopf (20B, 22B) des Hakens trennt.

6. Schelle nach einem der Ansprüche 3 bis 5, **dadurch gekennzeichnet, dass** der Außenwandabschnitt (15A, 15B) einen freien Längsrand (15'A, 15'B) aufweist, der auf der Außenseite des ersten Endes (10A) des Bandes (10) gelegen ist.

7. Schelle nach Anspruch 6, **dadurch gekennzeichnet, dass** der freie Längsrand des wenigstens einen Außenwandabschnittes (115A, 115B) einen Haken (151A, 151B) trägt.

8. Schelle nach einem der Ansprüche 1 bis 7, **dadurch gekennzeichnet, dass** die äußere Lasche in der Nähe eines Querrandes der Spange gelegen ist, welcher von dem freien Ende des zweiten Endes des Bandes entfernt ist.

9. Schelle nach einem der Ansprüche 1 bis 8, **dadurch gekennzeichnet, dass** die Spange zwei entsprechende radial vorspringende äußere Laschen (20, 22) aufweist, die sich jeweils von jeder der beiden Längsseiten der Spange (12) aus erstrecken, wobei das zweite Ende (10B) des Bandes (10) zwischen den Schäften (20A, 22A) der Laschen eingefügt werden kann.

10. Schelle nach Anspruch 9, **dadurch gekennzeichnet, dass** sie Mittel (20C, 22C) aufweist, um das Einfügen des zweiten Endes (10B) des Bandes (10) zwischen den Schäften (20A, 22A) der Laschen (20, 22) lediglich in der Nähe der Verbindungsstelle dieser Schäfte mit den Längsseiten der Spange (12) zu ermöglichen.

11. Schelle nach einem der Ansprüche 1 bis 10, **dadurch gekennzeichnet, dass** wenigstens eine der Laschen (20, 22), vorzugsweise beide Laschen, eine Innenrippe (20C, 22C) an der Verbindungsstelle zwischen ihrem Schaft (20A, 22A) und ihrem Kopf (20B, 22B) aufweist.

12. Schelle nach einem der Ansprüche 1 bis 11, **dadurch gekennzeichnet, dass** die Spange (12), wenigstens an ihrem äußeren Teil, in Bezug auf eine Mittelebene (IV-IV) des Bandes (10), senkrecht zu der Achse (Ax) der Schelle, symmetrisch ist.

13. Schelle nach einem der Ansprüche 1 bis 12, **dadurch gekennzeichnet, dass** die Spange (12) einen Innenteil (14) aufweist, der an der Innenseite des ersten Endes (10A) des Bandes (10) angeordnet ist und von dem ein Festlegungsquerrand (14A), der entgegengesetzt zum freien Ende (10'A) des ersten Endes des Bandes gewandt ist, mit einer Festlegungsquerkante (16A) des ersten Endes (10A) des Bandes (10), die eine in diesem ersten Ende ausgebildete Festlegungsvertiefung (16) begrenzt, zusammenwirkt, und dass das zweite Ende (10B) des Bandes (10) im tiefgezogenen Zustand, um gegen ein Bewegen in der Richtung einer Vergrößerung des Durchmessers der Schelle festgehalten zu werden, eine Haltequerkante (11) aufweist, die in der Festlegungsvertiefung (16) aufgenommen ist und mit einem Halterand (17A) dieser Festlegungsvertiefung (16) anschlagend zusammenwirkt.

14. Schelle nach Anspruch 13, **dadurch gekennzeichnet, dass** der Festlegungsquerrand (14A) ein freier Rand ist, der an einem ersten freien Ende (12A) des Innenteils (14) der Spange (12) gelegen ist, vorteilhafterweise am Grund einer Nut (19) des ersten freien Endes des Innenteils der Spange ausgebildet ist.

15. Schelle nach Anspruch 13 oder 14, **dadurch gekennzeichnet, dass** die Vertiefung des zweiten Endes (10B) des Bandes eine Haltevertiefung (11') bildet, die durch einen Querausschnitt begrenzt ist, wobei die Haltekante (11) an der Lippe des Ausschnitts ausgebildet ist, die am Grund der Haltevertiefung (11') gelegen ist.

16. Schelle nach einem der Ansprüche 13 bis 15, **dadurch gekennzeichnet, dass** der Innenteil (14) der Spange (12) einen zusätzlichen Festlegungsquerrand (14B) aufweist, welcher zu der Seite des freien Endes (10'A) des ersten Endes (10A) des Bandes gewandt ist und mit einer zusätzlichen Festlegungsquerkante (16'A) des ersten Endes (10A) des Bandes, die eine in diesem ersten Ende ausgebildete zusätzliche Festlegungsvertiefung (16') begrenzt, zusammenwirkt.

17. Klemmwerkzeug zum Festziehen einer Schelle nach einem der Ansprüche 1 bis 16, umfassend einen Kopf (32), der geeignet ist, an der Querspange (12) der Schelle positioniert zu werden, und einen Stempel (33), der geeignet ist, bewegt zu werden, um das zweite Ende (10B) des Bandes (10) tiefzuziehen, **dadurch gekennzeichnet, dass** der Kopf (32) wenigstens eine Aufnahme (34) aufweist, um wenigstens einen Teil der wenigstens einen durch die Spange der Schelle getragenen äußeren Lasche (20, 22) aufzunehmen, um das Werkzeug gegenüber der Schelle zu positionieren.

18. Klemmwerkzeug nach Anspruch 17, **dadurch gekennzeichnet, dass** die Aufnahme (34) einen hakenförmigen Schlitz umfasst.

## Claims

1. A clamping collar comprising a looped metal strap (10) and a transverse buckle (12) retained at the first end (10A) of the strap and forming, on the outer side of said first end, a passage (13) through which the second end (10B) of the strap can be inserted over the first end, the second end of the strap as inserted in this way being suitable for being indented so as to co-operate with at least one of the elements comprising the transverse buckle (12) and the first end (10A) of the strap, in order to be retained so that it is prevented from moving in the direction in which the diameter of the collar increases;
said clamping collar being **characterized in that** the buckle (12) carries at least one radially projecting outer tab (20, 22), the tab having the shape of a hook having a stem (20A, 22A) carrying a head (20B, 22B) under which a recess (D) is formed.

2. A collar according to claim 1, **characterized in that** the head (20B, 22B) of the hook has a free edge (20'B, 22'B) that extends substantially along the length of the strap.

3. A collar according to claim 1 or claim 2, **characterized in that** the passage (13) includes a restraint segment defined by at least one outer wall portion (15A, 15B) of the buckle (12) situated above the outer face of the first end (10A) of the strap, and **in that** the outer tab (20, 22) is offset longitudinally relative to said outer wall portion.

4. A collar according to claim 3, **characterized in that** the outer tab is separated from the outer wall portion by a cutout.

5. A collar according to claim 4, **characterized in that** the outer wall portion (15A, 15B) and the outer tab (22, 22) extend from a longitudinal edge of the buckle (12) and have the same length as measured from that edge, in the transverse direction, the outer tab having a longitudinal fold line (ℓp) that separates the stem (20A, 22A) and the head (20B, 22B) of the hook.

6. A collar according to any one of claims 3 to 5, **characterized in that** the outer wall portion (15A, 15B) has a free longitudinal edge (15'A, 15'B) situated on the outer side of the first end (10A) of the strap (10).

7. A collar according to claim 6, **characterized in that** the free longitudinal edge of the at least one external wall portion (115A, 115B) carries a hook (151A, 151B).

8. A collar according to any one of claims 1 to 7, **characterized in that** the outer tab is situated in the vicinity of a transverse edge of the buckle that is further away from the free tip of the second end of the strap.

9. A collar according to any one of claims 1 to 8, **characterized in that** the buckle has two analogous radially projecting outer tabs (20, 22) that respectively extend from respective ones of the two longitudinal sides of the buckle (12), it being possible for the second end (10B) of the strap (10) to be inserted between the stems (20A, 22A) of said tabs.

10. A collar according to claim 9, **characterized in that** it has means (20C, 22C) for allowing the second end (10B) of the strap (10) to be inserted between the stems (20A, 22A) of the tabs (20, 22) only in the vicinity of the junction between said stems and the longitudinal sides of the buckle (12).

11. A collar according to any one of claims 1 to 10, **characterized in that** at least one of the tabs (20, 22) and preferably each of the two tabs, has an inner rib (20C, 22C) at the junction between its stem (20A, 22A) and its head (20B, 22B).

12. A collar according to any one of claims 1 to 11, **characterized in that** the buckle (12) is, at least on its outer portion, symmetrical about a midplane (IV-IV) of the strap (10) that is perpendicular to the axis (Ax) of the collar.

13. A collar according to any one of claims 1 to 12, **characterized in that** the buckle (12) has an inner portion (14) that is disposed against the inner face of the first end (10A) of the strap (10) and that has a blocking transverse edge (14A) that faces in the opposite direction from the direction in which the free tip (10'A) of the first end of the strap faces, and that co-operates with a blocking transverse stop (16A) of the first end (10A) of the strap (10) that defines a blocking setback (16) formed in said first end, and **in that**, in the indented state so that it is retained so as to be prevented from moving in the direction in which the diameter of the collar increases, the second end (10B) of the strap (10) has a retaining transverse stop (11) received in the blocking setback (16) and co-operating in abutment with a retaining edge (17A) of said blocking setback (16).

14. A collar according to claim 13, **characterized in that** the blocking transverse edge (14A) is a free edge situated on a first free end (12A) of the inner portion (14) of the buckle (12), and advantageously formed at the back of a notch (19) in the first free end of the inner portion of the buckle.

15. A collar according to claim 13 or claim 14, **characterized in that** the indenting of the second end (10B) of the strap forms a retaining setback (11') that is defined by a transverse cutout, the retaining stop (11) being formed on the lip of said cutout that is situated at the back of the retaining setback (11').

16. A collar according to any one of claims 13 to 15, **characterized in that** the inner portion (14) of the buckle (12) has an additional blocking transverse edge (14B) that faces towards the free tip (10'A) of the first end (10A) of the strap and that co-operates with an additional blocking transverse stop (16'A) of the first end (10A) of the strap that defines an additional blocking setback (16') formed in said first end.

17. A tightening tool for tightening a collar according to any one of claims 1 to 16, said tightening tool comprising a head (32) suitable for being positioned on the transverse buckle (12) of the collar, and a punch (33) suitable for being moved to indent the second end (10B) of the strap (10), said tightening tool being **characterized in that** the head (32) has at least one housing (34) for receiving at least a portion of said at least one outer tab (20, 22) carried by the buckle of the collar, in order to position the tool relative to the collar.

18. A tightening tool according to claim 17, **characterized in that** the housing (34) comprises a hook-shaped slot.
